# EUROPÄISCHE PATENTSCHRIFT

(11) **EP 1 596 085 B1**
(45) Veröffentlichungstag und Bekanntmachung des Hinweises auf die Patenterteilung: **18.03.2009**
(21) Anmeldenummer: 05010224.3
(22) Anmeldetag: 11.05.2005
(51) Int. Cl.: F16D 48/02

(54) **Hydraulische Betätigungseinrichtung für eine Kupplung**
Hydraulic actuator for a clutch.
Actionneur hydraulique pour embrayage

(30) Priorität: 15.05.2004 DE 102004024309
(43) Veröffentlichungstag der Anmeldung: 16.11.2005
(73) Patentinhaber: LuK Lamellen und Kupplungsbau Beteiligungs KG, 77815 Bühl (DE)
(72) Erfinder: Grabenstätter, Jan, 76593 Gernsbach (DE)

(56) Entgegenhaltungen:
- EP-A2- 1 150 032
- EP-A2- 1 460 299
- DE-A1- 3 736 584
- DE-A1- 19 730 030
- US-A- 4 464 900

## Beschreibung

Die vorliegende Erfindung betrifft eine Druckbegrenzungseinrichtung in einer hydraulischen Strecke zur Betätigung einer Kupplung eines Fahrzeuges, umfassend zumindest einen Nehmerzylinder und einen Geberzylinder, welche über eine mit einem Fluid durchströmte Leitung miteinander verbunden sind.

Die hydraulische Betätigung des Kupplungspedals führt, insbesondere wenn das Fahrzeug in den unteren Motorgängen betrieben wird, beim plötzlichen Zurücknehmen des Fußes vom Kupplungspedal zu Stottererscheinungen des Motors. Zur Lösung dieser Problematik ist aus der Druckschrift DE 1 785 882 eine Betätigungseinrichtung für Fahrzeugkupplungen bekannt, bei der von einer Lösung ausgegangen wird, bei der dem Nehmerzylinder ein Rückschlagventil vorgeschaltet ist, dessen Ventilspindel eine Rückströmbohrung für die Druckflüssigkeit aufweist, um so bei einem plötzlichen Loslassen des Kupplungspedals infolge der Drosselung durch die Rückstrombewegung eine Verlangsamung der Rückwärtsbewegung des im Nehmerzylinder angeordneten Kolbens zu erreichen. Die Verzögerung kann aber durch Drosselbohrungen dieser Art nur schlecht erzielt werden, da die Drosselbohrungen wegen der starken Kupplungsfederkräfte im Durchmesser sehr klein gehalten werden müssen. Aus diesem Grunde wird in der DE 1 785 882 eine Lösung aufgezeigt, wo im Nehmerzylinder zwischen dem die Zulaufbohrung aufweisenden Zylinderboden und dem Nehmerkolben eine vom Nehmerkolben her in Richtung auf den Zylinderboden unter der Wirkung eines Kraftspeichers stehende Drosselscheibe angeordnet ist. Diese weist mehrere radial verlaufende Drosselnuten auf, um die Fluidströmung zu verlangsamen, so dass bei plötzlichen Bewegungen des Kupplungspedals Stottererscheinungen des Motors vermieden werden.

Bei der Druckschrift DE 37 36 584 A1 wird die Aufgabe, eine hydraulische Betätigungseinrichtung so auszulegen, dass Belastungsspitzen auch bei extremer Fahrweise, die mit extremen Einkuppelgeschwindigkeiten und damit Drehmomentenspitzen verbunden sind, vermieden werden, dadurch gelöst, dass in der Hydraulikleitung zwischen dem Geberzylinder und dem Nehmerzylinder ein Drosselventil vorgesehen ist. Auf diese Weise wird der Fluidstrom gedrosselt.

Darüber hinaus offenbart die Druckschrift DE 43 34 551 C2 eine weitere hydraulische Betätigungseinrichtung für eine Kupplung im Antriebsstrang eines Kraftfahrzeuges. In dieser Schrift wird die Aufgabe gelöst, dass in der mit der Betätigungseinrichtung verbundenen Hydraulikleitung zwischen Geberzylinder und Nehmerzylinder ein als Drosselventil ausgebildeter Ventilkörper vorgesehen ist, bei dem das Schließorgan beim Abheben von der Dichtfläche sicher verlagerbar ist. Diese Aufgabe wird dadurch gelöst, dass das Schließorgan einen becherförmigen Ansatz aufweist, innerhalb dessen die Druckfeder geführt ist und die Außenkontur des Schließorgans gegenüber der Innenwand des Ventilgehäuses so gestaltet ist, dass das Hydraulikfluid ungehindert dazwischen durchfließen kann.

Mit diesen aus dem Stand der Technik bekannten Lösungen für eine zusätzlich in der hydraulischen Strecke zur Betätigung einer Fahrzeugkupplung angeordnete Einrichtung wird bei einem Einkuppeln bei extrem schneller Rückhubbewegung des Pedals die Einkuppelgeschwindigkeit der Kupplung gedrosselt. Dies geschieht dadurch, dass der Fluidstrom in Richtung des Geberzylinders gedrosselt wird, wodurch die Einkuppelgeschwindigkeit reduziert wird. Mit den vorgeschlagenen Lösungen für eine Drosselung können eventuell schnelle Rückhubbewegungen reduziert werden. Beim normalen Betrieb treten jedoch zusätzlich dazu Druckreduzierungen auf, die vom Fahrer als unangenehmer Pedalkraftabfall wahrgenommen werden. Zudem führt diese Art der Drosselung dazu, dass die mit diesen Einrichtungen erzeugten Druckreduzierungen temperaturabhängig sind. Somit können insbesondere bei tiefen Temperaturen ungewollte größere Druckreduzierungen auftreten.

Demnach liegt der vorliegenden Erfindung die Aufgabe zugrunde, eine kostengünstige Druckbegrenzungseinrichtung in der hydraulischen Strecke für eine Kupplung der eingangs genannten Gattung vorzuschlagen, mit der mit geringem technischen Aufwand sowohl Drehmomentenspitzen bzw. extrem schnelle Rückhubbewegungen des Pedals in allen Betriebssituationen vermieden als auch die Einkuppelgeschwindigkeit begrenzt wird.

Diese Aufgabe wird mit den Merkmalen des Anspruchs 1 gelöst. Weitere vorteilhafte Ausgestaltungen dieser Lösung ergeben sich aus den Unteransprüchen.

Indem die Blendenbohrung des Gehäuses und die Öffnung(en) des Halterings als möglichst kurze Bohrungen ausgeführt sind, und die auf den topfförmigen Haltering wirkende Fläche in nicht geschaltetem Zustand kleiner ist als während der Schaltfase, werden die temperaturabhängigen Druckverluste aufgrund Leckage zwischen Haltering und Gehäuse ausgeglichen.

Somit wird mit der vorgeschlagenen Druckbegrenzungseinrichtung ein so genannter Momentenspitzenbegrenzer PTL (peak torque limiter) angegeben, bei dem der Blendenkörper beim Einkuppeln erst bei einem vorbestimmten Volumenstrom eine Druckreduzierung bzw. einen Druckabfall vornimmt, so dass der normale Betrieb nicht beeinflusst wird und trotzdem unerwünschte Drehmomentenspitzen an dem Antriebsstrang vermieden werden. Die mit dieser Einrichtung erzeugten Druckreduzierungen haben den weiteren Vorteil, dass die Druckabfälle temperaturunabhängig sind, so dass auch eine Begrenzung der Einkuppelgeschwindigkeit bei tiefen Temperaturen nicht wesentlich ansteigt.

Eine Weiterbildung der vorliegenden Erfindung sieht vor, dass der Blendenkörper mit zumindest einer Blendenöffnung axial beweglich in einem Gehäuse derart aufgenommen ist, dass der Blendenkörper beim Auskuppeln durch den Fluidstrom gegen einen ersten Anschlag des Gehäuses ohne Druckreduzierung im Fluidstrom bewegbar ist, und dass der Blendenkörper beim Einkuppeln gegen einen federbelasteten Haltering bewegbar ist, welcher beim Vorliegen eines vorbestimmten Volumenstromes derart weiter bewegt wird, dass mindestens eine der Blendenöffnungen zumindest teilweise abgedeckt wird. Durch diese volumenstromabhängige Arbeitsweise des Blendenkörpers wird eine besonders verlustfreie Betätigung der Kupplung realisiert.

Vorzugsweise ist der Blendenkörper topfförmig ausgebildet und weist als Blendenöffnung zumindest eine zentrale Blendenbohrung oder dergleichen auf, so dass ein axiales Durchströmen zumindest durch die zentrale Blendenbohrung stattfinden kann, wodurch ein gewünschter Druckabfall im Fluidstrom zum Vermeiden der nicht erwünschten Nebenwirkungen durch extrem schnelle Rückhubbewegungen realisiert wird. Es sind jedoch auch andere konstruktive Ausgestaltungen des Blendenkörpers denkbar, um eine Optimierung des volumenstromabhängigen Druckabfalls beim Einkuppeln zu realisieren.

Zur Verbesserung der Blendengeometrie der zentralen Blendenbohrung, um mögliche Drosselverluste durch die Länge der Blendenbohrung zu vermeiden, wird in weiterer vorteilhafter Ausgestaltung der Erfindung die zentrale Blendenbohrung zur Längenoptimierung angeschrägt. Vorzugsweise ist die Anschrägung so ausgebildet, dass sich die Blendenbohrung in Strömungsrichtung zu dem Geberzylinder hin verjüngt. Es sind jedoch auch andere Formen für die zentrale Blendenbohrung denkbar. Insgesamt wird durch diese Blendengeometrie eine Begrenzung des Druckabfalls, insbesondere bei tiefen Temperaturen, erreicht.

Gemäß einer vorteilhaften Weiterbildung der Erfindung ist vorgesehen, dass zur Gewährleistung des Durchflusses einer bestimmten Fluidmenge und damit zur Verringerung des Druckabfalls, zusätzliche Blendenöffnungen, z. B. mehrere am topfförmig ausgebildeten Blendenkörper über dessen Umfang verteilt axial verlaufende Nuten oder dergleichen angeordnet sind.

Zur Realisierung der erfindungsgemäßen volumenstromabhängigen Änderung des Druckes in der hydraulischen Strecke ist vorgesehen, dass bei Druckbeaufschlagung der Haltering mit dem Federelement oder dergleichen gegen einen zweiten Anschlag des Gehäuses vorgespannt wird, wobei sich das Federelement gegen diesen Gehäuseverschluss abstützt. Der Anschlag wird durch eine gestufte Änderung des Durchmessers im Innern des Gehäuses realisiert. Der Gehäuseverschluss wird ebenfalls an einer Durchmesserabstufung befestigt bzw. abgestützt.

In einer weiteren Ausgestaltung der Erfindung ist vorgesehen, dass am Boden des Halterings mehrere Öffnungen vorgesehen sind. Diese Öffnungen sind vorzugsweise als Bohrungen ausgebildet und dienen zur zusätzlichen Durchströmung der Druckbegrenzungseinrichtung. Die Bohrungen des Blendenkörpers sind vorzugsweise so angeordnet, dass sie mindestens teilweise mit den Öffnungen des Halterings in Deckung gebracht werden können. Diese korrespondierende Anordnung der Bohrungen und Öffnungen dient dazu, ungewünschte Druckreduzierungen zu vermeiden.

Im Normalbetrieb werden daher unerwünschte Druckreduzierungen dadurch vermieden, indem der Blendenkörper beim Einkuppeln gegen den federbelasteten Haltering so bewegt wird, dass das Fluid durch sämtliche Blendenöffnungen des Blendenkörpers und durch sämtliche Bohrungen des Halterings ohne wesentlichen Druckverlust strömen kann. Dies stellt sicher, dass bei Betätigung der Kupplung, und außerdem unabhängig von der Temperatur, nur bei vorbestimmten Volumenströmen des Fluids Druckreduzierungen auftreten.

Wenn jedoch die durch den Volumenstrom des Fluids auf den Haltering wirkende Kraft größer als die Vorspannkraft des Federelements ist, wird der Haltering in Anlage an den Gehäuseverschluss gebracht, so dass das Fluid nur durch die Blendenbohrung strömt und somit eine volumenstromabhängige Druckreduzierung erfolgt. Somit wird sichergestellt, dass erst der Blendenkörper beim Einkuppeln oberhalb eines bestimmten Volumenstroms, der über dem im normalen Betrieb auftretenden Volumenstrom liegt, zugeschaltet wird. Unterhalb dieses vorbestimmten Volumenstroms bleiben die Druckabfälle jedoch an der Druckbegrenzungseinrichtung gering.

In einer weiteren vorteilhaften Ausgestaltung der Erfindung tritt anstelle des Gehäuseverschlusses ein weiteres Gehäuse, wobei beide Gehäuse mittels eines O-Ringes gegeneinander abgedichtet werden. Diese Lösung hat den Vorteil, dass die Einrichtung direkt in die hydraulische Leitung integriert werden kann. Dabei werden die beiden Gehäuse auf einfache Weise mit Hilfe eines Bajonettverschlusses miteinander verbunden. Somit sind beide Gehäuse sicher und schnell miteinander verbindbar. Bei dieser Ausgestaltung ist es vorteilhaft zur Gewährleistung des Durchflusses des Fluids Öffnungen in der Nähe des Bodens des Halterings an dessen Umfang vorzusehen.

Diese Öffnungen können allerdings ebenso gut in das als Verschluss für die Druckbegrenzungseinrichtung dienende Gehäuse eingebracht werden, wobei die Öffnungen vorteilhafter Weise radial am Umfang des Fortsatzes dieses zweiten Gehäuses anzuordnen sind.

Eine weitere vorteilhafte Ausgestaltung der Erfindung sieht vor, die Druckbegrenzungseinrichtung direkt in der hydraulischen Verbindungsleitung zwischen Geberzylinder und Nehmerzylinder anzuordnen oder in den Geber- oder Nehmerzylinder zu integrieren.

Besonders vorteilhaft und kostengünstig ist es, wenn alle Bauteile der Einrichtung außer der Feder aus Kunststoff ausgebildet sind.

Nachfolgend wird die vorliegende Erfindung anhand einer Zeichnung näher beschrieben. Es zeigen:
- Figuren 1a - 1c: eine schematische Darstellung einer erfindungsgemäßen Druckbegrenzungseinrichtung mit Blendenkörper und Haltering in drei verschiedeen Stellungen,
- Figur 1a: die Stellung von Blendenkörper und Haltering beim Auskuppelvorgang,
- Figur 1b: die Stellung von Blendenkörper und Haltering beim Einkuppelvorgang mit langsamer und mittlerer Einkuppelgeschwindigkeit,
- Figur 1c: die Stellung von Blendenkörper und Haltering beim Einkuppelvorgang mit schneller Einkuppelgeschwindigkeit,
- Figur 2: eine graphische Darstellung der Variante gemäß Figur 1 für verschiedene Verläufe eines Druckabfalls im Volumenstrom einer Hydraulikleitung.
- Figuren 3a - 3c: eine schematische Darstellung einer weiteren Variante einer nicht erfindungsgemäßen Druckbegrenzungseinrichtung ohne Blendenkörper in drei verschiedenen Stellungen,

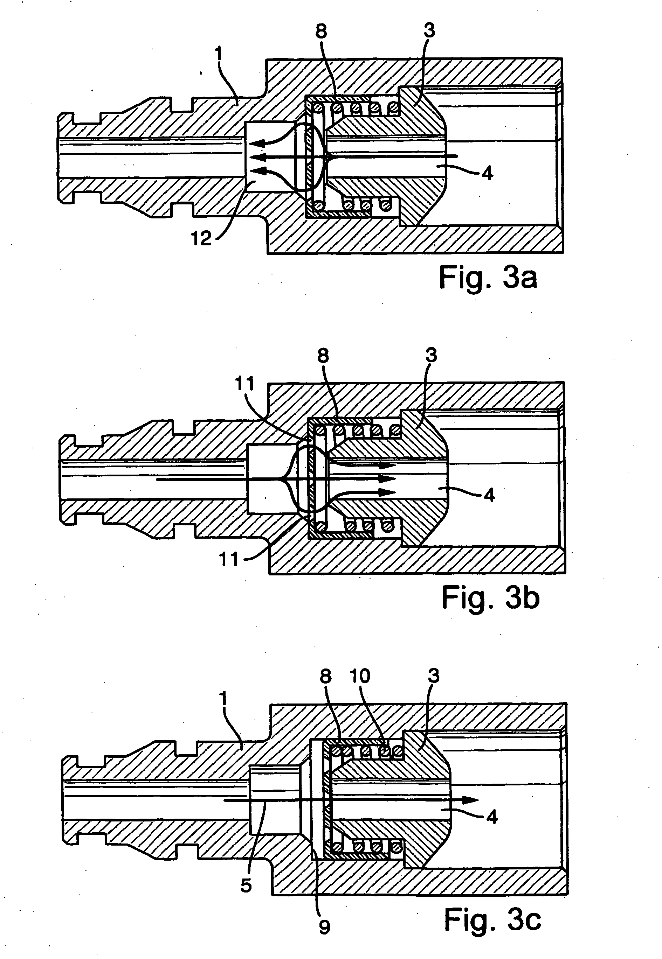

- Figur 3a: die Stellung des Halterings beim Auskuppelvorgang,
- Figur 3b: die Stellung des Halterings beim Einkuppelvorgang mit langsamer und mittlerer Einkuppelgeschwindigkeit,
- Figur 3c: die Stellung des Halterings beim Einkuppelvorgang,

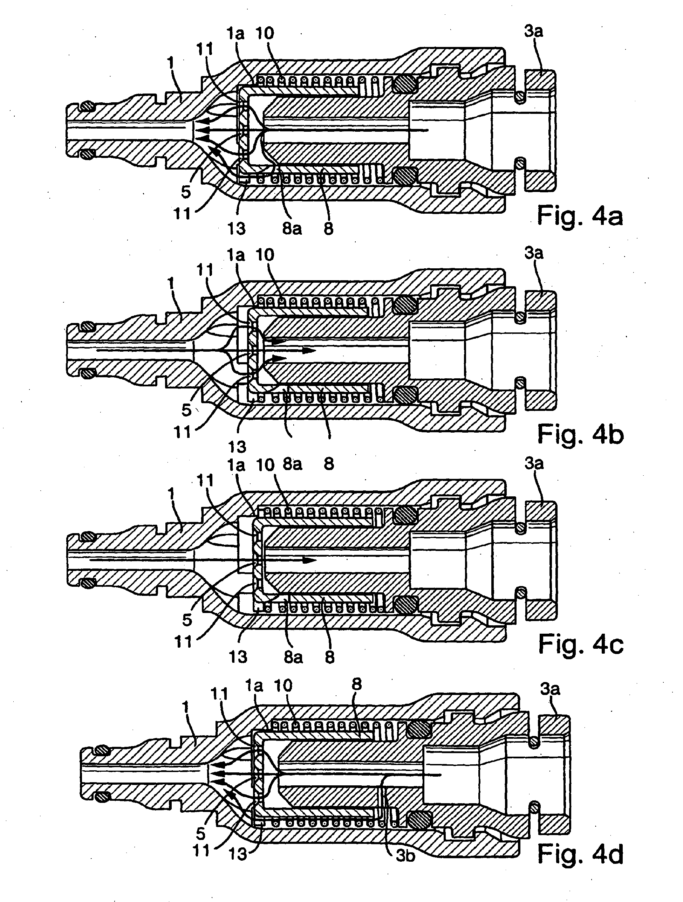

- Figur 4a - 4d: eine schematische Darstellung einer weiteren Variante einer nicht erfindungsgemäßen Druckbegrenzungseinrichtung, bei der der Gehäuseverschluss von einem zweiten Gehäuse gebildet wird.

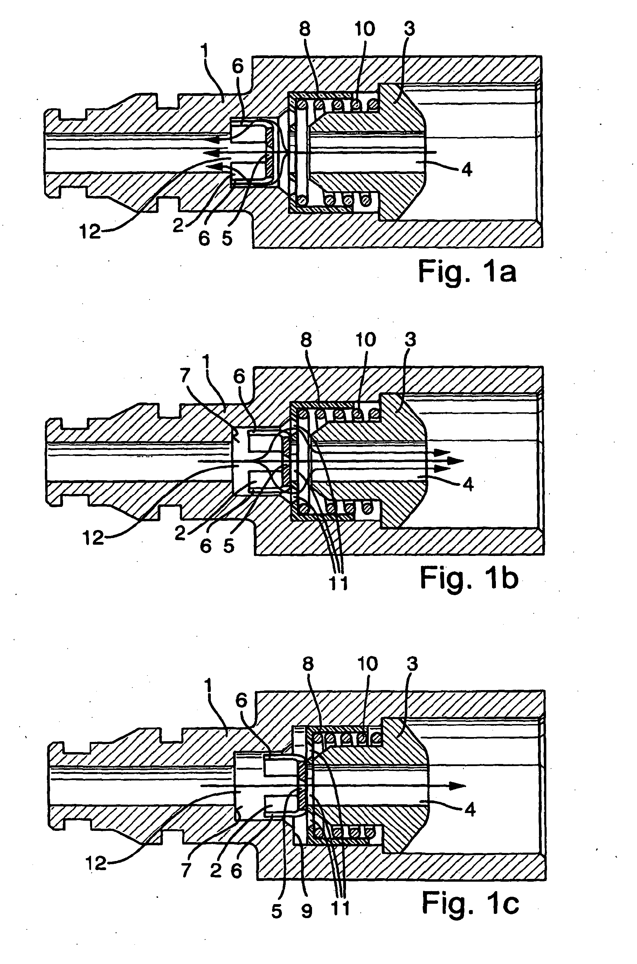

In den Figuren 1a bis 1c ist eine erste Ausführungsvariante einer erfindungsgemäßen Druckbegrenzungseinrichtung anhand verschiedener Teilansichten dargestellt.

Die Druckbegrenzungseinrichtung weist ein Gehäuse 1 auf, welches beispielsweise in der Hydraulikleitung zwischen einem Nehmer- und einem Geberzylinder vorgesehen ist. Im Gehäuse 1 der Druckbegrenzungseinrichtung ist ein Blendenkörper 2 vorgesehen, welcher axial im Gehäuse 1 bewegbar aufgenommen ist. Das Gehäuse 1 ist geberzylinderseitig mit einem Gehäuseverschluss 3 verschlossen. Dieser Gehäuseverschluss 3 besteht im Wesentlichen aus einem Fortsatz, der in einen Ansatz übergeht, wobei der Durchmesser des Fortsatzes kleiner ist als der des Ansatzes. Im Innern ist der Gehäuseverschluss 3 mit einer zentralen Bohrung 4 zum Durchströmen von Fluid versehen, die als Durchgangsbohrung ausgeführt ist. Zwischen Blendenkörper 2 und Gehäuseverschluss 3 ist des Weiteren ein Haltering 8 angeordnet, der gegen eine Feder 10, die auf dem Fortsatz des Gehäuseverschluss 3 radial geführt wird, zwischen zwei Anschlägen bewegbar ist. Ein Anschlag wird vom Gehäuse 1 gebildet (Anschlag 9) und der andere Anschlag vom im Durchmesser erweiterten Ansatz des Gehäuseverschluss 3. Die axiale Bewegung des Blendenkörpers 2 innerhalb der zentralen Bohrung 12 wird nehmerzylinderseitig durch den Anschlag 7 des Gehäuses 1 und geberzylinderseitig durch den Haltering 8 begrenzt.

Der Blendenkörper 2 ist weiterhin topfförmig ausgebildet und weist eine zentrale Blendenbohrung 5 als Blendenöffnung auf. Ferner sind mehrere am Umfang verteilt und sich über die Länge des Blendenkörpers 2 erstreckende Nuten 6 vorgesehen. Der Blendenkörper 2 ist innerhalb der zentralen Bohrung 12 axial bewegbar, wobei die nehmerzylinderseitige Wegbegrenzung von einem ersten Anschlag 7 gebildet wird, der durch eine Durchmesserabstufung des Gehäuses 1 zustande kommt.

Figur 1a zeigt die Stellung des Blendenkörpers 2 beim Auskuppelvorgang. Bei diesem Vorgang wird der Blendenkörper 2 gegen den Anschlag 7 des Gehäuses 1 geschoben und vom Fluid umströmt. Aus der Figur 1 a geht hervor, dass zu diesem Zeitpunkt sowohl der Blendekörper 2 als auch der Haltering 8 an den beiden Anschlägen 7 und 9 des Gehäuses 1 anliegen. Dabei werden beide Bauteile vom Fluid durchströmt, wobei das Fluid durch die Bohrungen 4, 5, 12 und die Nuten 6 strömt. Der Haltering 8 wird über die Feder 10 mit einer vorbestimmten Vorspannung beaufschlagt und somit an den Anschlag 9 des Gehäuses 1 angepresst. Gehäuseverschluss 3, Haltering 8 und Blendenkörper 2 werden in dieser Stellung quasi ohne Druckabfall durchströmt. Die Strömungsrichtung und der Weg des Fluids werden durch die in den Figuren 1a bis 1c dargestellten Pfeile angedeutet.

Die Blendenbohrung 5 ist bei diesem ersten Ausführungsbeispiel der erfindungsgemäßen Druckbegrenzungseinrichtung in Strömungsrichtung zu dem Geberzylinder verjüngt ausgebildet. Ferner weist der Haltering 8 zumindest eine Öffnung 11 an seinem Boden zur Fluid-Durchströmung auf.

In Figur 1b wird dargestellt, dass beim Einkuppeln die Position von Blendenkörper 2 und Haltering 8 im Gehäuse 1ebenfalls keinen wesentlichen Druckabfall erzeugen. Dies wird dadurch erreicht, dass beim Einkuppeln infolge des in Richtung des Geberzylinders strömenden Fluids der Blendenkörper 2 gegen den Haltering 8 geschoben wird. Dabei kann das Fluid durch die Blendenbohrung 5 sowie durch die Öffnungen 11 im Haltering 8 und durch die Bohrung 4 des Gehäuseverschlusses 4 ungehindert strömen, ohne einen Druckabfall zu verursachen.

Wenn während des Einkuppelvorganges der Volumenstrom einen vorbestimmten Wert übersteigt, wie in Figur 1c dargestellt, wird ein Druckabfall mit Hilfe des in Aktion tretenden Blendenkörpers 2 erzeugt. Dies wird dadurch erreicht, dass durch die aufgrund der resultierenden Kraft des ansteigenden Volumenstromes der Blendenkörper 2 weiter den Haltering 8 entgegen der Kraft der Feder 10, die dabei auf ihre maximale Dichte zusammengedrängt werden kann, vom zweiten Anschlag 9 des Gehäuses 1 abhebt und diesen gegen den Gehäuseverschluss 3 so lange schiebt, bis der Haltering 8 am Ende des Fortsatzes des Gehäuseverschlusses 3 anliegt. In dieser Position kann nur noch die Blendenbohrung 5 durchströmt werden, so dass ein maximaler Druckabfall erzeugt wird.

Während des Schaltvorgangs reduziert sich der Druckabfall temperaturabhängig aufgrund einer zusätzlichen Leckagestelle zwischen Haltering 8 und Gehäuse 1, die insbesondere bei der Ausführung von Gehäuse 1 und Haltering 8 aus Kunststoff stark schwanken kann. Dadurch muss unabhängig von der Temperatur der Volumenstrom zum vollständigen Schalten (Kupplungsvorgang) von Haltering 8 der weiter gesteigert werden. Um bei Abheben von Haltering 8 von Anschlag 9 ohne Vergrößerung des Volumenstroms ein sofortiges Durchschalten zu gewährleisten, ist die auf den Haltering 8 wirkende Fläche in nicht geschaltetem Zustand kleiner als während der Schaltfase, wodurch während der Schaltfase auftretende temperaturabhängigen Druckverluste aufgrund der Leckage zwischen Haltering (8) und Gehäuse (1) ausgeglichen werden; da aufgrund der größeren Fläche während der Schaltfase zum Erreichen der Federkraft ein geringerer Druckabfall benötigt wird.

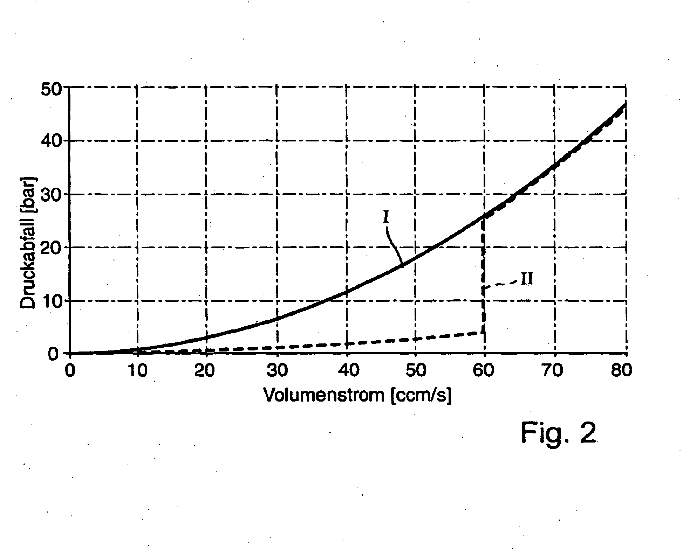

In Figur 2 ist der Druckabfall dargestellt, der sich bei der Variante gemäß Figur 1 beim Einkuppeln in Abhängigkeit der Größe des Volumenstroms ergibt. Der Verlauf I zeigt den Druckabfall bei ständig aktivierter Blende. Der Verlauf II zeigt dagegen den Druckabfall bei volumenstromabhängiger Zuschaltung der Blende, wie er mittels erfindungsgemäßer Druckbegrenzungseinrichtung erreicht wird. Aus einem Vergleich der beiden Verläufe I und II wird deutlich, dass bei ständig zugeschalteter Blende auch im Normalbetrieb ein unerwünschter Druckabfall erzeugt würde. Jedoch wird mit Hilfe der erfindungsgemäßen Druckbegrenzungseinrichtung nur bei großen Volumenströmen beim Einkuppeln ein entsprechender Druckabfall erzeugt.

In den Figuren 3a bis 3c ist eine weitere Variante einer Druckbegrenzungseinrichtung dargestellt. Der wesentliche Unterschied zu den bisher aufgezeigten Ausführungen besteht darin, dass bei dieser Ausführung der Blendenkörper 2 und der Haltering 8 zu einem Teil zusammengefasst sind.

Die Druckbegrenzungseinrichtung nach den Figuren 3a bis 3c besteht ein einem Gehäuse 1 mit einem Gehäuseverschluss 3 und einem beweglichen, topfförmig gestalteten Haltering 8 mit einer zentrisch angeordneten Blendenbohrung 5 und mindestens einer am Boden um die zentrisch angeordnete Blendenbohrung 5 vorgesehenen Öffnungen. 11. Das Gehäuse 1 und der Gehäuseverschluss 3 bilden die beiden Anschläge für den Haltering 8. Der Haltering 8 wird von der Feder 10, die sich am Gehäuseverschluss 3 abstützt, gegen das Gehäuse 1 gedrückt.

Beim Auskuppeln gemäß Figur 3a wird der Haltering 8 gegen das Gehäuse 1 gedrückt und die Blendenbohrung 5 und die Öffnungen 11 werden durchströmt. Beim Einkuppeln gemäß Figur 4b strömt das Fluid ebenfalls über die Blendenbohrung 5 und die Öffnungen 11. Da somit mehrere Bohrungen durchströmt werden, bleiben die Druckabfälle gering. Der Druckabfall steigt mit dem Volumenstrom an. Wird der Druckabfall größer als die Vorlast der Feder 10 den Haltering 8 gegen den Anschlag 9 des Gehäuses 1 drückt, hebt der Haltering 8 vom Gehäuse 1 ab und wird gegen den Gehäuseverschluss 3 gedrückt (s. Figur 3c). Wenn der Haltering 8 am Gehäuseverschluss 3 anliegt, kann nur noch die Blendenbohrung 5 durchströmt werden. Die Druckabfälle steigen schlagartig an wodurch die Einkuppelgeschwindigkeit reduziert wird.

Die auf den Haltering 8 wirkende Fläche ist in nicht geschaltetem Zustand kleiner als während der Schaltfase, wodurch die temperaturabhängigen Druckverluste aufgrund von Leckage zwischen Haltering 8 und Gehäuse 1 ausgeglichen werden und der Schaltvorgang temperaturunabhängig ist.

Die Figuren 4a bis 4d zeigen schematisch ein weiteres Ausführungsbeispiel für eine Druckbegrenzungseinrichtung, wobei der Gehäuseverschluss 3 durch einen weiteres Gehäuseteil 3a ersetzt wird, in verschiedenen Drucksituationen, durch die beim Auskuppeln nahezu keine Druckabfälle auftreten. Bei diesen Figuren ist somit die Druckbegrenzungseinrichtung zwischen zwei Gehäuseteilen eingebettet angeordnet, die mittels eines O-Ringes 14 gegeneinander abgedichtet und mittels Bajonettverschluss axial zusammengehalten werden. Dabei wird die Kraft der Feder 10 ausgenutzt, die den Bajonettverschluss in die Rastierung drückt, die ein unbeabsichtigtes Aufdrehen des Verschlusses verhindert.

Figur 4a zeigt eine Druckbegrenzungseinrichtung in der Situation des Auskuppelns. Der Haltering 8, der auf der Verlängerung eines Gehäuses 3a radial geführt wird, wird vom Fluid gegen das Gehäuse 1 gedrückt. Das Fluid strömt über die Blendenbohrung 5 und die Öffnungen 11 und außerdem über eine oder mehrere Öffnungen 8a im Haltering 8. Der Haltering 8 besitzt Ausbrüche 13, über die das Fluid über die Öffnungen 8a in Richtung Kupplung strömen kann und mittels derer der Haltering 8 an den Ausbuchtungen 1a vorbei in das Gehäuse 1 eindringen kann. Die Öffnungen 8a sorgen dafür, dass beim Auskuppeln an der Druckbegrenzungseinrichtung nahezu keine Druckabfälle auftreten.

Figur 4b zeigt die Druckbegrenzungseinrichtung während des Einkuppelvorganges. Der Haltering 8 in dieser Situation vom Fluid gegen die Feder 10 geschoben. Diese stützt sich an den Ausbuchtungen 1a des Gehäuses 1 ab und wird dadurch auf eine bestimmte Kraft vorgespannt. Durch die Bewegung des Halterings 8 in Richtung Gehäuse 3a, werden die Öffnungen 8a des Gehäuses 3a verschlossen. Das Fluid kann jetzt nur noch über die Blendenbohrung 5 und die Öffnungen 11 fließen, wodurch die Druckabfälle zwar ansteigen, jedoch noch gering bleiben. Der Druckabfall steigt mit dem Volumenstrom an. Wird der Druckabfall größer als die Vorlastkraft der Feder 10, drückt der Haltering 8 die Feder 10 zusammen, bis er an der Stirnseite des Gehäuses 3a angelangt ist (s. Figur 4c). Das Fluid kann nun nur noch durch die Blendenbohrung 5 fließen, wodurch die Druckabfälle stark ansteigen und wiederum die Einkuppelgeschwindigkeit reduziert wird.

In der Figur 4d ist eine weiter Ausführungsform der Druckbegrenzungseinrichtung dargestellt. Anstelle Öffnungen 8a in den Haltering 8 einzubringen, können ebenso gut eine oder mehrere Öffnungen 3b in das Gehäuse 3a eingebracht werden. Diese Öffnungen 3b werden ebenfalls beim Einkuppeln vom Haltering 8 verschlossen.

### Bezugszeichenliste

- 1: Gehäuse
- 1a: Ausbuchtung
- 2: Blendenkörper
- 3: Gehäuseverschluss
- 3a: Gehäuse
- 3b: Öffnungen
- 4: Bohrung
- 5: Blendenbohrung
- 6: Nut
- 7: Ersten Anschlag
- 8: Haltering
- 8a: Öffnung
- 9: Zweiten Anschlag
- 10: Feder
- 11: Öffnungen
- 12: Zentrale Bohrung
- 13: Ausbrüche
- 14: O-Ring

## Patentansprüche

1. Druckbegrenzungseinrichtung in einer hydraulischen Strecke zur Kupplungsbetätigung, umfassend einen Nehmerzylinder und einen Geberzylinder, die über zumindest eine mit einem Fluid durchströmte Leitung hydraulisch miteinander verbunden sind, wobei die Druckbegrenzungseinrichtung zumindest einen topfförmigen Blendenkörper (2) mit einer zentralen Blendenbohrung (5) zur Druckreduzierung und einen mittels einer Feder (10) druckbeaufschlagten topfförmigen Haltering (8) aufweist, an dessen Boden eine Zentralbohrung (11) und mindestens eine auf einem Teilkreis radial von dieser beabstandete Öffnung (11) angeordnet sind und der Blendenkörper (2) bzw. die zentrale Blendenbohrung (5) beim Einkuppeln der Kupplung bei Überschreitung eines vorbestimmten Volumenstromes des Fluids zuschaltbar und mindestens eine Öffnung (11) des Halterings (8) bei Uberschreiten eines vorbestimmten Druckabfalls verschließbar ist, wobei die Länge der mindestens einen korrespondierenden Öffnung (11) und der Blendenbohrung (5) der jeweiligen Wandstärke des Halterings (8) und des Blendenkörpers (2) entspricht.

2. Druckbegrenzungseinrichtung nach Anspruch 1, **dadurch gekennzeichnet, dass** der Blendenkörper (2) mit zumindest einer Blendenöffnung axial beweglich in einem Gehäuse (1) derart aufgenommen ist, dass der Blendenkörper (2) beim Auskuppeln durch den Fluidstrom gegen einen ersten Anschlag (7) des Gehäuses (1) ohne Druckreduzierung bewegbar ist, und dass der Blendenkörper (2) beim Einkuppeln gegen einen federbelasteten Haltering (8) derart bewegbar ist, dass zumindest eine Blendenöffnung bei Vorliegen eines vorbestimmten Volumenstromes abdeckbar ist.

3. Druckbegrenzungseinrichtung nach Anspruch 1, **dadurch gekennzeichnet, dass** die zentrale Blendenbohrung (5) angeschrägt ist.

4. Druckbegrenzungseinrichtung nach Anspruch 1 und 2, **dadurch gekennzeichnet, dass** als zusätzliche Öffnungen mehrere axial verlaufende Nuten (6) am Umfang des Blendenkörpers (2) vorgesehen sind.

5. Druckbegrenzungseinrichtung nach Anspruch 1, **dadurch gekennzeichnet, dass** der Haltering (8) mit der Feder (10) gegen einen zweiten Anschlag (9) des Gehäuses (1) vorgespannt wird.

6. Druckbegrenzungseinrichtung nach Anspruch 1, **dadurch gekennzeichnet, dass** der Haltering (8) an seinem Boden mehrere Öffnungen (11) aufweist, die die ebenfalls als Blenden ausgeführt und deren Bohrungen angeschrägt sind.

7. Druckbegrenzungseinrichtung nach Anspruch 1, **dadurch gekennzeichnet, dass** der Blendenkörper (2) beim Einkuppeln gegen den federbelasteten Haltering (8) bewegbar ist, sodass das Fluid durch sämtliche Blendenöffnungen des Blendenkörpers (2) und durch sämtliche Öffnungen (11) des Halterings (8) ohne wesentlichen Druckverlust strömt.

8. Druckbegrenzungseinrichtung nach Anspruch 1, **dadurch gekennzeichnet, dass** die Feder (10) auf einem Fortsatz des Gehäuseverschlusses (3) geführt wird und sich zwischen dem zweiten Anschlag (9) des Gehäuses (1) und einem erweiterten Ansatz am Gehäuseverschluss (3) axial abstützt.

9. Druckbegrenzungseinrichtung nach Anspruch 8, **dadurch gekennzeichnet, dass** die Feder (10) zwischen dem Haltering (8) und dem Fortsatz des Gehäuseverschlusses (3) geführt wird.

10. Druckbegrenzungseinrichtung nach Anspruch 1, **dadurch gekennzeichnet, dass** der Gehäuseverschluss (3) topfförmig ausgebildet ist und der Boden eine Bohrung (4) aufweist.

11. Druckbegrenzungseinrichtung nach Anspruch 1 und 10, **dadurch gekennzeichnet, dass** die Feder (10) radial von der Wand des topfförmig ausgebildeten Halterings (8) und der Wand des topfförmig ausgebildeten Gehäuseverschlusses (3) geführt wird, und sich axial zwischen dem zweiten Anschlag (9) des Gehäuses (1) und dem Boden des Gehäuseverschlusses (3) abstützt.

12. Druckbegrenzungseinrichtung nach Anspruch 6 und 7, **dadurch gekennzeichnet, dass**, wenn die durch den Volumenstrom des Fluids auf den Haltering (8) wirkende Kraft größer als die Vorspannkraft des Federelements (10) ist, der Haltering (8) in Anlage an den Gehäuseverschluss (3) bringbar ist, sodass das Fluid mit vorbestimmter Druckreduzierung nur durch die Blendenbohrung (5) des Blendenkörpers (2) strömt.

13. Druckbegrenzungseinrichtung nach Anspruch 1, **dadurch gekennzeichnet, dass** der Gehäuseverschluss (3) als weiteres Gehäuse (3a) ausgebildet und gegenüber dem Gehäuse (1) mittels eines O-Ringes (14) abgedichtet ist.

14. Druckbegrenzungseinrichtung nach Anspruch 13, **dadurch gekennzeichnet, dass** die beiden Gehäuse (1) und (3a) über einen Bajonettverschluss miteinander verbunden sind.

15. Druckbegrenzungseinrichtung nach Anspruch 2, **dadurch gekennzeichnet, dass** in der Nähe des Bodens des Halterings (8) an dessen Umfang Öffnungen (8a) vorgesehen sind.

16. Druckbegrenzungseinrichtung nach Anspruch 13, **dadurch gekennzeichnet, dass** das Gehäuse (3a) am Umfang verteilt mehrere radial angeordnete Öffnungen (3b) aufweist.

17. Druckbegrenzungseinrichtung nach Anspruch 1, **dadurch gekennzeichnet, dass** diese direkt in der hydraulischen Verbindungsleitung zwischen Geberzylinder und Nehmerzylinder angeordnet oder in den Geber- oder Nehmerzylinder integriert ist.

18. Druckbegrenzungseinrichtung nach Anspruch 1, **dadurch gekennzeichnet, dass** alle Bauteile der Einrichtung außer der Feder (10) aus Kunststoff ausgebildet sind.

## Claims

1. Pressure limitation device in a hydraulic section for clutch actuation, comprising a slave cylinder and a master cylinder which are connected to one another hydraulically via at least one line through which a fluid flows, the pressure limitation device having at least one pot-shaped diaphragm body (2) with a central diaphragm bore (5) for pressure reduction and a pot-shaped holding ring (8) which is pressure-loaded by means of a spring (10) and on the bottom of which are arranged a central bore (11) and at least one orifice (11) spaced apart radially from the latter on a pitch circle, and, during the engagement of the clutch, when a predetermined volume flow of the fluid is overshot, the diaphragm body (2) or the central diaphragm bore (5) being capable of being shut off, and at least one orifice (11) of the holding ring (8) being capable of being closed when a predetermined pressure drop is overshot, the length of the at least one corresponding orifice (11) and of the diaphragm bore (5) corresponding to the respective wall thickness of the holding ring (8) and of the diaphragm body (2).

2. Pressure limitation device according to Claim 1, **characterized in that** the diaphragm body (2) having at least one diaphragm orifice is received axially movably in a housing (1) in such a way that, during disengagement, the diaphragm body (2) can be moved, without pressure reduction, against a first stop (7) of the housing (1) by the fluid stream, and **in that**, during engagement, the diaphragm body (2) can be moved against a spring-loaded holding ring (8) in such a way that at least one diaphragm orifice can be covered in the presence of a predetermined volume flow.

3. Pressure limitation device according to Claim 1, **characterized in that** the central diaphragm bore (5) is bevelled.

4. Pressure limitation device according to Claims 1 and 2, **characterized in that** a plurality of axially running grooves (6) on the circumference of the diaphragm body (2) are provided as additional orifices.

5. Pressure limitation device according to Claim 1, **characterized in that** the holding ring (8) is prestressed against a second stop (9) of the housing (1) by means of the spring (10).

6. Pressure limitation device according to Claim 1, **characterized in that** the holding ring (8) has on its bottom a plurality of orifices (11) which are likewise designed as diaphragms and the bores of which are bevelled.

7. Pressure limitation device according to Claim 1, **characterized in that**, during engagement, the diaphragm body (2) can be moved against the spring-loaded holding ring (8), so that the fluid flows through all the diaphragm orifices of the diaphragm body (2) and through all the orifices (11) of the holding ring (8) without appreciable pressure loss.

8. Pressure limitation device according to Claim 1, **characterized in that** the spring (10) is guided on an extension of the housing closure (3) and is supported axially on the housing closure (3) between the second stop (9) of the housing (1) and a widened base.

9. Pressure limitation device according to Claim 8, **characterized in that** the spring (10) is guided between the holding ring (8) and the extension of the housing closure (3).

10. Pressure limitation device according to Claim 1, **characterized in that** the housing closure (3) is of pot-shaped design, and the bottom has a bore (4).

11. Pressure limitation device according to Claims 1 and 10, **characterized in that** the spring (10) is guided radially by the wall of the holding ring (8) of pot-shaped design and by the wall of the housing closure (3) of pot-shaped design and is supported axially between the second stop (9) of the housing (1) and the bottom of the housing closure (3).

12. Pressure limitation device according to Claims 6 and 7, **characterized in that**, when the force acting on the holding ring (8) due to the volume flow of the fluid is higher than the prestressing force of the spring element (10), the holding ring (8) can be brought to bear against the housing closure (3), so that the fluid flows with predetermined pressure reduction only through the diaphragm bore (5) of the diaphragm body (2).

13. Pressure limitation device according to Claim 1, **characterized in that** the housing closure (3) is designed as a further housing (3a) and is sealed off with respect to the housing (1) by means of an O-ring (14).

14. Pressure limitation device according to Claim 13, **characterized in that** the two housings (1) and (3a) are connected to one another via bayonet fastening.

15. Pressure limitation device according to Claim 2, **characterized in that** orifices (8a) are provided in the vicinity of the bottom of the holding ring (8) on the circumference of the latter.

16. Pressure limitation device according to Claim 13, **characterized in that** the housing (3a) has, distributed on the circumference, a plurality of radially arranged orifices (3b).

17. Pressure limitation device according to Claim 1, **characterized in that** this is arranged directly in the hydraulic connecting line between the master cylinder and slave cylinder or is integrated into the master cylinder or slave cylinder.

18. Pressure limitation device according to Claim 1, **characterized in that** all the components of the device, with the exception of the spring (10), are produced from plastic.

## Revendications

1. Dispositif de limitation de pression dans une section hydraulique d'un actionneur d'embrayage, comprenant un cylindre récepteur et un cylindre émetteur, qui sont hydrauliquement reliés l'un à l'autre par au moins une conduite parcourue par un fluide, dans lequel le dispositif de limitation de pression comprend au moins un corps de diaphragme en forme de godet (2) avec un orifice de diaphragme central (5) pour la réduction de pression et une bague de retenue en forme de godet (8) soumise à la pression au moyen d'un ressort (10), dans le fond de laquelle sont disposés un alésage central (11) et au moins une ouverture (11) radialement distante de celui-ci sur un cercle primitif et le corps de diaphragme (2) ou l'orifice de diaphragme central (5) peut être connecté en cas de dépassement d'un courant volumique prédéterminé lors de l'engagement de l'embrayage et au moins une ouverture (11) de la bague de retenue (8) peut être fermée en cas de dépassement d'une chute de pression prédéterminée, dans lequel la longueur de l'au moins une ouverture correspondante (11) et de l'orifice de diaphragme (5) correspond à l'épaisseur de paroi respective de la bague de retenue (8) et du corps de diaphragme (2).

2. Dispositif de limitation de pression selon la revendication 1, **caractérisé en ce que** le corps de diaphragme (2) avec au moins un orifice de diaphragme est logé en mouvement axial dans un boîtier (1) de telle manière que le corps de diaphragme (2) soit déplaçable par le courant de fluide contre une première butée (7) du boîtier (1) sans réduction de pression lors du débrayage, et **en ce que** le corps de diaphragme (2) est déplaçable contre une bague de retenue (8) à ressort lors de l'embrayage, de telle manière qu'au moins un orifice de diaphragme puisse être couvert en cas de présence d'un courant volumique prédéterminé.

3. Dispositif de limitation de pression selon la revendication 1, **caractérisé en ce que** l'orifice de diaphragme central (5) est chanfreiné.

4. Dispositif de limitation de pression selon les revendications 1 et 2, **caractérisé en ce qu'**il est prévu plusieurs rainures orientées axialement (6) sur la périphérie du corps de diaphragme (2) en guise d'ouvertures supplémentaires.

5. Dispositif de limitation de pression selon la revendication 1, **caractérisé en ce que** la bague de retenue (8) est précontrainte contre une deuxième butée (9) du boîtier (1) au moyen du ressort (10).

6. Dispositif de limitation de pression selon la revendication 1, **caractérisé en ce que** la bague de retenue (8) présente dans son fond plusieurs ouvertures (11), qui forment également des diaphragmes et dont les alésages sont chanfreinés.

7. Dispositif de limitation de pression selon la revendication 1, **caractérisé en ce que** le corps de diaphragme (2) est déplaçable contre la bague de retenue à ressort (8) lors de l'embrayage, de telle manière que le fluide s'écoule sans perte de pression importante à travers tous les orifices de diaphragme du corps de diaphragme (2) et à travers toutes les ouvertures (11) de la bague de retenue (8).

8. Dispositif de limitation de pression selon la revendication 1, **caractérisé en ce que** le ressort (10) est guidé sur un prolongement de la fermeture de boîtier (3) et prend appui axialement entre la deuxième butée (9) du boîtier (1) et un épaulement élargi de la fermeture de boîtier (3).

9. Dispositif de limitation de pression selon la revendication 8, **caractérisé en ce que** le ressort (10) est guidé entre la bague de retenue (8) et le prolongement de la fermeture de boîtier (3).

10. Dispositif de limitation de pression selon la revendication 1, **caractérisé en ce que** la fermeture de boîtier (3) est réalisée en forme de godet et le fond présente un alésage (4).

11. Dispositif de limitation de pression selon la revendication 1 et 10, **caractérisé en ce que** le ressort (10) est guidé radialement par la paroi de la bague de retenue (8) réalisée en forme de godet et la paroi de la fermeture de boîtier (3) réalisée en forme de godet, et prend appui axialement entre la deuxième butée (9) du boîtier (1) et le fond de la fermeture de boîtier (3).

12. Dispositif de limitation de pression selon la revendication 6 et 7, **caractérisé en ce que**, lorsque la force agissant sur la bague de retenue (8) au moyen du courant volumique de fluide est supérieure à la force de précontrainte de l'élément de ressort (10), la bague de retenue (8) peut être amenée à buter contre la fermeture de boîtier (3), de telle manière que le fluide s'écoule uniquement à travers l'orifice de diaphragme (5) du corps de diaphragme (2) avec une réduction de pression prédéterminée.

13. Dispositif de limitation de pression selon la revendication 1, **caractérisé en ce que** la fermeture de boîtier (3) forme un autre boîtier (3a) et est rendue étanche par rapport au boîtier (1) au moyen d'un joint torique (14).

14. Dispositif de limitation de pression selon la revendication 13, **caractérisé en ce que** les deux boîtiers (1) et (3a) sont assemblés l'un à l'autre par un joint à baïonnette.

15. Dispositif de limitation de pression selon la revendication 2, **caractérisé en ce qu'**il est prévu des ouvertures (8a) à la périphérie de la bague de retenue (8), à proximité du fond de celle-ci.

16. Dispositif de limitation de pression selon la revendication 13, **caractérisé en ce que** le boîtier (3a) présente plusieurs ouvertures (3b) disposées radialement réparties à la périphérie.

17. Dispositif de limitation de pression selon la revendication 1, **caractérisé en ce que** celui-ci est disposé directement dans la conduite de raccordement hydraulique entre le cylindre émetteur et le cylindre récepteur ou est intégré dans le cylindre émetteur ou dans le cylindre récepteur.

18. Dispositif de limitation de pression selon la revendication 1, **caractérisé en ce que** tous les composants du dispositif, à l'exception du ressort (10), sont réalisés en matière plastique.
